# Europäisches Patentamt
## European Patent Office
## Office européen des brevets

(19)

(11) Veröffentlichungsnummer: **0 005 833**
**B1**

(12)

# EUROPÄISCHE PATENTSCHRIFT

(45) Veröffentlichungstag der Patentschrift: **19.05.82**

(51) Int. Cl.³: **H 04 M 3/56, H 04 Q 11/04**

(21) Anmeldenummer: **79101666.0**

(22) Anmeldetag: **30.05.79**

(54) Verfahren und Schaltungsanordnung zur Herstellung von Konferenzverbindungen in einem PCM-Zeitmultiplexvermittlungssystem.

(30) Priorität: **05.06.78 US 912440**

(43) Veröffentlichungstag der Anmeldung:
**12.12.79 Patentblatt 79/25**

(45) Bekanntmachung des Hinweises auf die Patenterteilung:
**19.05.82 Patentblatt 82/20**

(84) Benannte Vertragsstaaten:
**AT CH DE FR GB IT NL SE**

(56) Entgegenhaltungen:
**EP - 79 100 652**
**FR - A - 2 334 244**
**GB - A - 1 498 400**
**US - A - 3 984 643**
**US - A - 4 119 807**

**1978 INTERNATIONAL ZÜRICH SEMINAR ON DIGITAL COMMUNICATIONS, 7—9, März 1978, Zürich, CH, ALLES: "An intelligent network processor for a digital central office"**

(73) Patentinhaber: **SIEMENS AKTIENGESELLSCHAFT**
**Berlin und München**
**Postfach 22 02 61**
**D-8000 München 22 (DE)**

(72) Erfinder: **Southard, Gary D.**
**51 Carlton Avenue**
**Marlton New Jersey (US)**

Courier Press, Leamington Spa, England.

Verfahren und Schaltungsanordnung zur Herstellung von Konferenzverbindungen in einem
PCM-Zeitmultiplexvermittlungssystem

Die Erfindung betrifft ein Verfahren und eine Schaltungsanordnung zur Herstellung von Konferenzverbindungen in einem PCM-Zeitmultiplexvermittlungssystem, demgemäß aus den von den Konferenzteilnehmern gelieferten PCM-Worten unter Bildung von Zwischensummencodeworten, die in einem Konferenzspeicher zwischengespeichert und jeweils mit Auftreten eines neuen, von einem Konferenzteilnehmer gelieferten PCM-Wortes ausgelesen, daraufhin zu diesem PCM-Wort addiert und als neues Zwischensummencodewort wieder eingespeichert werden, Gesamtsummencodeworte gebildet werden, von denen im nachfolgenden Pulsrahmen während der den Konferenzteilnehmern zugeordneten Zeitlagen jeweils die entsprechend verzögerten, im vorangegangenen Pulsrahmen gelieferten PCM-Worte subtrahiert werden, demgemäß ferner die solcherart gebildeten Endteilsummencodeworte jeweils demjenigen Konferenzteilnehmer zugesendet werden, dessen Summenanteil sie nicht enthalten, und demgemäß die Speicherung der Zwischensummen-Codeworte im Zuge der Bildung der Gesamtsummencodeworte und die Speicherung der Gesamtsummencodeworte im Zuge der Bildung der Endteilsummencodeworte in jeweils einer anderen von Pulsrahmen zu Pulsrahmen gewechselten Hälfte eines sowohl beim Einschreiben als auch beim Auslesen wahlfrei angesteuerten Konferenzspeichers erfolgt.

Eine bekannte Anordnung (US—A— 3 984 643), bei der ebenfalls der Konferenzspeicher in zwei Hälften unterteilt ist, die wechselweise zum Aufsummieren der einzelnen Konferenzanteile und im Zug der mehrmaligen Lieferung der gebildeten Summencodeworte während der den Konferenzteilnehmern zugeordneten Zeitlagen ausgenutzt werden, stellt ein eigenständige Konferenzeinheit dar und umfaßt einen weiteren Speicher, mit dessen Hilfe die erforderliche Verzögerung der Konferenzanteile um Pulsrahmenlänge herbeigeführt wird, bevor sie von den aus der einen genannten Konferenzspeicherhälfte ausgelesenen Summencodeworte subtrahiert werden.

Bei einem die Durchführung des obengenannten Verfahrens betreffenden Vorschlag für eine entsprechende Anordnung (Europäische Patentanmeldung 79100652) sind konkrete Angaben über die Durchführung der Subtraktion nicht gemacht, da diese dort lediglich als Alternative ins Auge gefaßt ist.

Die Aufgabe der vorliegenden Erfindung besteht darin, ein Verfahren der eingangs genannten Art derart durchzuführen, daß eine schaltungstechnische Realisierung einen möglichst geringen Aufwand bedeutet.

Erfindungsgemäß wird dies dadurch erreicht, daß zur Verzögerung der von den Konferenzteilnehmern gelieferten PCM-Worte um die Zeitdauer eines Pulsrahmens der im Zusammenhang mit der Vermittlung von normalen Zweierverbindungen der Zeitkanalumsetzung dienende und dabei beim Einschreiben zyklisch und beim Auslesen wahlfrei angesteuerte Vermittlungsspeicher sowie der zugehörige Haltespeicher mitausgenutzt werden, wozu der Haltespeicher während der den Konferenzteilnehmern zugeordneten Zeitlagen ein Kriterium liefert aufgrund dessen die von einem zyklisch arbeitenden Adressenzähler gelieferten Ansteueradressen für den Vermittlungsspeicher, die in jedem Fall als Einschreibadressen dienen auch als Ausleseadressen wirken.

Erfindungsgemäß werden also Bestandteile einer Vermittlungsstelle, die auch dann vorhanden sein müssen, wenn kein Konferenzsatz vorgesehen ist, für die Zwecke der Herstellung und Aufrechterhaltung von Konferenzverbindungen ausgenutzt.

Gemäß einer weiteren Ausgestaltung der Erfindung wird eine zweckmäßige Schaltungsanordnung zur Durchführung des erfindungsgemäßen Verfahrens angegeben.

Nachstehend wird die Erfindung unter Bezugnahme auf eine Figur, die die erwähnte Schaltungsanordnung zeigt, näher erläutert.

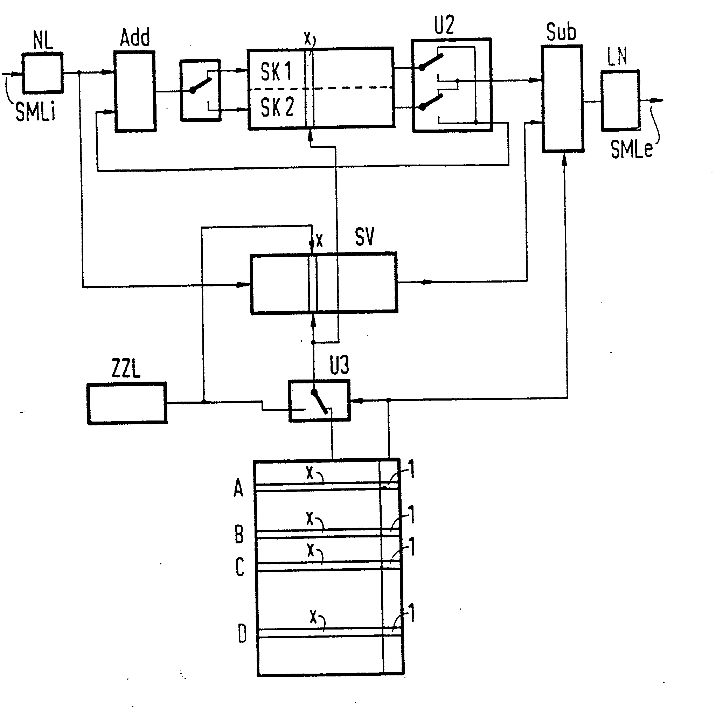

Bei der dargestellten Schaltungsanordnung ist als Beispiel vorausgesetzt, daß 16 PCM-Zeitmultiplexleitungen für ankommenden und 16 PCM-Zeitmultiplexleitungen für abgehende Übertragungsrichtung angeschlossen sind, wobei eingangsseitig eine zeitliche Verschachtelung der auf den einzelnen Zeitmultiplexleitungen gebildeten Zeitkanälen sowie eine Serien-Parallel-Wandlung vorgesehen ist. In der Figur ist eingangsseitig jedoch lediglich eine Supermultiplexleitung SMLi dargestellt, auf der demgemäß 512 Zeitlagen gebildet sind und die 8 Leitungsadern für die 8 Bit der PCM-Worte aufweist. Ausgangsseitig ist eine entsprechende Supermultiplexleitung SMLe dargestellt, die zu einem nicht dargestellten Parallel-Serienwandler und einem Demultiplexer führt, durch die eine Parallel-Serienwandlung und eine Verteilung auf die 16 abgehenden PCM-Zeitmultiplexleitungen vorgenommen wird.

Da die auf den Supermultiplexleitungen übertragenen PCM-Worte zur Erzielung eines konstanten Nutz-Stör-Amplitudenverhältnisses über den gesamten Amplitudenbereich der Fernmeldeinformationen einer nichtlinearen Codierung unterworfen sind und solcherart codierte PCM-Worte nicht ohne weiteres addiert bzw. subtrahiert werden können, ist eingangsseitig ein Codewandler NL zur Umwandlung von nichtlinearer Codedarstellung in lineare Codedarstellung und ausgangsseitig ein Codewandler LN zur Umwandlung von linearer Codedarstellung in nichtlineare Codedarstellung vorgesehen.

Kernstück des der Herstellung von Konferenzverbindungen dienenden Teils der dargestellten Schaltungsanordnung ist ein Konferenzspeicher mit zwei gleich großen Teilen SK1 und SK2, die jeweils eine der Anzahl der höchstens gleichzeitig zu erwartenden Konferenzverbindungen gleiche Anzahl von Speicherzellen aufweisen. Diese beiden Speicherteile sind eingangsseitig über einen Umschalter U1 alternativ mit dem Ausgang einer Addiervorrichtung Add verbindbar.

Ausgangsseitig sind die Speicherzellen dieser beiden Speicherteile über einen Umschalter U2 alternativ mit dem ersten Eingang einer Subtrahiervorrichtung Sub oder mit dem zweiten Eingang der erwähnten Addiereinrichtung Add verbindbar. Die erwähnten Umschalter sind hier der Anschaulichkeit halber als mechanische Schalter dargestellt, in der Praxis jedoch als elektronische Schalter realisiert. Der Ausgang des Umcodierers NL ist mit dem Eingang eines Verzögerungsgliedes verbunden, dessen Ausgang mit dem zweiten Eingang der Subtrahiereinrichtung Sub in Verbindung steht. Dieses Verzögerungsglied ist im vorliegenden Falle der Vermittlungsspeicher SV der Vermittlungsstelle, dessen Bestandteil die beschriebene Konferenzschaltung ist und dient in erster Linie der Herstellung von Zweierverbindungen durch entsprechende Zeitlagenumsetzung. Da im Zusammenhang mit der Herstellung solcher Zweierverbindungen jeweils zwei Speicherzellen benötigt werden, weist der Vermittlungsspeicher SV für die insgesamt 256 gleichzeitig möglichen Zweierverbindungen 512 Speicherzellen auf, die jeweils einer der Zeitlagen auf den Supermultiplexleitungen zugeordnet sind. Diese Speicherzellen werden beim Einschreiben zyklisch angesteuert, was mit der Verbindung des Ausgangs eines Zeitlagenzählers ZZL mit dem Eingang einer solchen Speicherzelle angedeutet ist, beim Auslesen jedoch wahlfrei. Die Ansteueradressen für das wahlfreie Auslesen liefert ein Haltespeicher, der ebenfalls 512 den Zeitlagen zugeordnete Speicherzellen für solche Ansteueradressen enthält.

Sofern der beschriebene Vermittlungsspeicher SV im Zuge der Herstellung von Konferenzverbindungen lediglich die Aufgabe einer Zeitverzögerung um einen Pulsrahmen hat, werden seine Speicherzellen sowohl beim Einschreiben als auch beim Auslesen zyklisch angesteuert. Die Umschaltbarkeit auf die beiden erwähnten Betriebsarten ist durch den Umschalter U3 angedeutet, der im Falle einer Konferenzverbindung zum Auslesen anstelle einer vom Haltespeicher ausgegebenen Ansteueradresse die vom erwähnten Zeitlagenzähler ZZL erzeugte Adresse an den Vermittlungsspeicher SV liefert.

Die Umschaltekriterien für den Umschalter U3 sind in zusätzlichen Speicherplätzen der Speicherzellen des Haltespeichers H gespeichert. Diese Kriterien führen im Falle des Vorliegens einer Konferenzverbindung außerdem dazu, daß die Subtrahiereinrichtung Sub als solche wirkt. Im Falle einer normalen Zweierverbindung ist sie nämlich lediglich als Durchgang für die aus dem Vermittlungsspeicher SV ausgelesenen Informationen geschaltet.

Nachstehend wird der Betrieb der in der Figur dargestellten Schaltungsanordnung im Zusammenhang mit der Herstellung von Konferenzverbindungen näher erläutert. Es wird dabei davon ausgegangen, daß die Umschalter U1 bis U3 die dargestellte Schaltstellung einnehmen.

Für die Abwicklung der betrachteten Konferenzverbindung, an der beispielsweise vier Konferenzteilnehmer A, B, C und D beteiligt sein sollen, wird ein beliebiges Paar gleichgeordneter freier Speicherzellen X in den Konferenzspeicherteilen SK1 und SK2 ausgewählt, das durch entsprechende Einträge im Haltespeicher H während der den vier Konferenzteilnehmern zugeordneten Zeitlagen jeweils beim Einschreiben und beim Auslesen wahlfrei angesteuert wird. Beim Auftreten eines von einem Konferenzteilnehmer gelieferten PCM-Wortes auf der Supermultiplexleitung SMLi bzw. am ersten Eingang der Addiervorrichtung Add wird also hier aus der Speicherzelle X des ersten Speicherteils SK1 der darin bewfindliche Speicherinhalt ausgelesen und an den zweiten Eingang der Addiereinrichtung Add zurückgeführt. Das daraufhin gebildete Zwischensummencodewort wird wieder in diese Speicherzelle X des Speicherteils SK1 eingeschrieben. Die Voraussetzungen für die erforderlichen geringfügigen zeitlichen Verschiebungen zwischen dem Einschreibevorgang und dem Auslesevorgang sind wegen der Paralleldarstellung der PCM-Wörter gegeben. Der erläuterte Vorgang wiederholt sich so lange, bis ein Gesamtsummencodewort gebildet ist, das aus den PCM-Worten sämtlicher Konferenzteilnehmer zusammengesetzt ist.

Zu Beginn des nächsten Pulsrahmens werden die Umschalter U1 und U2 in die entgegengesetzte Schaltstellung gebracht, so daß einerseits der Ausgang der Speicherzelle X des erwähnten ersten Konferenzspeicherteils SK1 mit dem ersten Eingang der Subtrahiereinrichtung Sub verbindbar ist und andererseits die vorstehend beschriebenen Vorgänge sich nunmehr im Zusammenhang mit dem zweiten Konferenzspeicherteil SK2 wiederholen.

Während der den Konferenzteilnehmern zugeordneten Zeitlagen im nunmehr betrachteten Pulsrahmen wird das in der Speicherzelle X des Speicherteils SK1 befindliche Gesamtsummencodewort mehrfach zerstörungsfrei ausgelesen und, wie erwähnt, der Subtrahiereinrichtung Sub zugeführt. Jeweils gleichzeitig erscheint am zweiten Eingang dieser Einrichtung ein im vorangegangenen Pulsrahmen aufgetretenes, von einem Konferenzteilnehmer geliefertes PCM-Wort, das durch den Speicher SV um die Länge eines Pulsrahmens verzögert worden ist. Die den Zeitlagen der Konferenzteilnehmer zugeordneten Speicherzellen dieses Vermittlungsspeichers werden hierzu, wie erwähnt, sowohl beim Einschreiben als auch beim Auslesen zyklisch angesteuert. Während der den Konferenzteilnehmern zugeordneten Zeitlagen liefert die Subtrahiereinrichtung Sub also jeweils Teilendsummencodeworte, die den Konferenzanteil des Konferenzteilnehmers, dem die betreffende Zeitlage zugeordnet ist, nicht enthalten.

Diese Teilendsummencodeworte, die lineare Codedarstellung aufweisen, werden durch den Umcodierer LN in nichtlineare Codedarstellung umgewandelt und gelangen dann über die abgehende Supermultiplexleitung SMLe und die daran angeschlossenen, hier nicht dargestellten Einrichtungen und Zeitmultiplexleitungen an den betreffenden Konferenzteilnehmer.

In darauffolgenden Pulsrahmen vertauschen die beiden Konferenzspeicherteile SK1 und SK2 wieder ihre Rolle. Bevor einer dieser Speicherteile zum Aufsummieren der PCM-Worte der einzelnen Konferenzteilnehmer herangezogen wird, erfolgt ein Löschen des Inhalts der für die betreffende Konferenz belegten Speicherzelle X, so daß zu dem PCM-Wort, das in diesem Pulsrahmen als erstes auftritt, hier das PCM-Wort des Konferenzteilnehmers A, der Wert 0 addiert wird. Das Kriterium für einen derartigen Löschvorgang wird aus einem zu Beginn jedes zweiten Pulsrahmens auftretenden Kennungswort abgeleitet.

Wenn mit der dargestellten Schaltungsanordnung normale Zweierverbindungen hergestellt werden sollen, werden in zusätzliche Speicherplätze derjenigen Speicherzellen des Haltespeichers H, die den Zeitlagen dieser Zweierverbindungen zugeordnet sind, Kriterien eingespeichert, die zum einen dazu führen, daß die Speicherzellen des Vermittlungsspeichers SV beim Auslesen wahlfrei angesteuert werden, der Umschalter U3 nimmt dann also die andere Schaltstellung ein, andererseits wird die Subtrahiereinrichtung Sub derart beeinflußt, daß sie nur noch die vom Vermittlungsspeicher SV aus an ihrem zweiten Eingang gelangenden PCM-Worte aufnimmt und diese lediglich auf die Supermultiplexleitung SMLe durchschaltet.

## Patentansprüche

1. Verfahren zur Herstellung von Konferenzverbindungen in einem PCM-Zeitmultiplexvermittlungssystem, demgemäß aus den von den Konferenzteilnehmern gelieferten PCM-Worten unter Bildung von Zwischensummencodeworten, die in einem Konferenzspeicher zwischengespeichert und jeweils mit Auftreten eines neuen, von einem Konferenzteilnehmer gelieferten PCM-Wortes ausgelesen, daraufhin zu diesem PCM-Wort addiert und als neues Zwischensummencodewort wieder eingespeichert werden, Gesamtsummencodeworte gebildet werden, von denen im nachfolgenden Pulsrahmen während der den Konferenzteilnehmern zugeordneten Zeitlagen jeweils die entsprechend verzögerten, im vorangegangenen Pulsrahmen gelieferten PCM-Worte subtrahiert werden, demgemäß ferner solcherart gebildete Endteilsummen-Codeworte jeweils dem Konferenzteilnehmer zugesandt werden, dessen Summenanteil sie nicht enthalten, und demgemäß die Speicherung der Zwischensummen-Codeworte im Zuge der Bildung der Gesamtsummencodeworte und die Speicherung der Gesamtsummencodeworte im Zuge der Bildung der Entteilsummencodeworte in jeweils einer anderen von Pulsrahmen zu Pulsrahmen gewechselten Hälfte eines sowohl beim Einschreiben aus auch beim Auslesen wahlfrei angesteuerten Konferenzspeichers erfolgt, dadurch gekennzeichnet, daß zur Verzögerung der von den Konferenzteilnehmern gelieferten PCM-Worte um die Zeitdauer eines Pulsrahmens der im Zusammenhang mit der Vermittlung von hormalen Zweiverbindungen der Zeitkanalumsetzung dienende und dabei beim Einschreiben zyklisch und beim Auslesen wahlfrei angesteuerte Vermittlungsspeicher (SV) sowie der zugehörige Haltespeicher (H) mitausgenutzt werden, wozu der Haltespeicher (H) während der den Konferenzteilnehmern zugeordneten Zeitlagen ein Kriterium liefert, aufgrund dessen die von einem zyklisch arbeitenden Adressenzähler (ZZL) gelieferten Ansteueradressen für den Vermittlungsspeicher, die in jedem Fall als Einschreibansteueradressen dienen, auch als Ausleseadressen wirken.

2. Schaltunganordnung zur Durchführung des Verfahrens nach Anspruch 1, mit einem aus zwei gleich großen Teilen bestehenden Konferenzspeicher mit jeweils der Anzahl der höchstens gleichzeitig zu erwartenden Konferenzverbindungen gleicher Anzahl von Speicherzellen, die jeweils gleichzeitig mit der gleichgeordneten Speicherzelle im anderen Konferenzspeicherteil wahlfrei angesteuert werden, ferner mit einer Addiervorrichtung, deren einer Eingang mit der Zeitmultiplexleitung für ankommende Übertragungsrichtung in Verbindung steht und deren Ausgang von Pulsrahmen zu Pulsrahmen abwechselnd mit den Speicherzelleneingängen des einen oder des anderen Konferenzspeicherteils verbindbar ist, sowie mit einer Subtrahiereinrichtung, dadurch gekennzeichnet, daß die Subtrahiereinrichtung (ub) mit ihrem Ausgang an die Zeitmultiplexleitung für abgehende Übertragungsrichtung (SMLi) und mit ihrem einen Eingang von Pulsrahmen zu Pulsrahmen abwechselnd mit den Speicherzellenausgängen des einen oder des anderen Konferenzspeicherteils (SK1, SK2) verbindbar ist, daß der Vermittlungsspeicher (SV) der Vermittlungsstelle, dessen Bestandteil die Schaltungsanordnung ist, eingangsseitig mit der Zeitmultiplexleitung für ankommende Übertragungsrichtung (SMLi) und ausgangsseitig mit dem zweiten Eingang der Subtrahiereinrichtung (Sub) in Verbindung steht, daß jede der den auf den Zeitmultiplexleitung gebildeten Zeitlagen zugeordneten Speicherzellen des zugehörigen Haltespeichers (H) außer Speicherplätzen für die Ansteueradressen des Vermittlungsspeichers (SV) zusätzliche Speicherplätze für Angaben über die Art der abzuwickelnden Verbindungen aufweist, daß ferner ein Umschalter (U3) vorgesehen ist, der bei Fehlen der genannten Angaben seine eine Schaltstellung einnimmt, in der er die vom Haltespeicher gelieferten Ansteueradressen an die Auslesesteuereingänge des Vermittlungsspeichers (SV) weiterleitet und bei Vorhandensein der genannten Angaben in seine andere Schaltstelle umschaltet, in der er die von einem Adressenzähler (ZZL) gelieferten Ansteueradressen an die Auslesesteuereingänge des Vermittlungsspeichers (SV) weiterleitet, und daß die Subtrahiereinrichtung einen Steuereingang aufweist, über den sie bei Vorhandensein der genannten Angaben von einer Schaltstellung, in der sie lediglich als Durchgangsschaltung für die an ihrem zweiten Eingang gelangenden PCM-Worte dient, in eine Schaltstellung gebracht wird, in der sie als Subtrahiereinrichtung wirksam ist.

**Revendications**

1. Procédé pour établir des liaisons pour des communications collectives (conférences) dans un système de commutation multiplex à répartition dans le temps à modulation par impulsions et codage (PCM), du type dans lequel on forme à partir des mots PCM fournis par les participants à la communication collective, tout en formant des mots de code de sous-totaux qui sont mémorisés temporairement dans une mémoire de conférence et qui sont lus à l'apparition d'un nouveau mot PCM fourni par un participant à la conférence pour ensuite être additionnés à ce mot PCM et être à nouveau mémorisés sous la forme d'un nouveau mot de code de sous-total, des mots de code de somme totale dont on soustrait dans la trame d'impulsions suivantes et pendant les créneaux temporels associés aux participants à la conférence, les mots PCM fournis dans la trame d'impulsions précédente et retardés de façon correspondante, dans lequel des mots de code de somme partielle finale sont envoyés à celui des participants à la conférence dont ils ne contiennent pas la quote-part de la somme, et dans lequel la mémorisation du mot de code du sous-total est opérée pendant la formation du mot de code de la somme totale, alors que la mémorisation du mot de code de la somme totale est opérée pendant la formation des mots de code du sous-total final dans la moitié, alternée de trame d'impulsion à trame d'impulsions, d'une mémoire de conférence librement attaquée à l'inscription et à la lecture, caractérisé par le fait que pour retarder les mots PCM fournis par les participants à la conférence d'une durée de trame d'impulsions, on utilise également la mémoire de commutation (SV) qui sert à la conversion du canal dans la commutation de la liaison normale entre deux postes et qui est attaqué cycliquement à l'inscription et librement à la lecture, ainsi que la mémoire d'arrêt (H), cette dernière fournissant pendant les créneaux temporels associés aux participants à la conférence un critère sur la base duquel les adresses d'attaque pour la mémoire de commutation, qui sont fournies par un compteur d'adresses (ZZL) opérant cycliquement et qui, de toute manière servent d'adresse de commande pour l'inscription, agissant également comme adresses de lecture.

2. Montage pour la mise en oeuvre du procédé selon la revendication 1, comportant une mémoire de conférence à deux parties identiques dont chacune comprend un nombre de cellules de mémoire égal au nombre maximum de liaison de conférence pouvant se présenter simultanément et qui sont attaquées librement avec la cellule de mémoire de même ordre dans l'autre partie de la cellule de conférence, comportant, en outre, un dispositif additionneur dont une entrée est en liaison avec la ligne multiplex à répartition dans le temps pour la direction de transmission d'entrée et dont la sortie est susceptible d'être reliée, de trame d'impulsions à trame d'impulsions, alternativement aux entrées des cellules de mémoire de l'une ou de l'autre partie de la mémoire de conférence, et comportant un dispositif de soustraction, caractérisé par le fait que le dispositif de soustraction (Sub) est susceptible d'être relié par sa sortie à la ligne multiplex à répartition dans le temps pour la direction de transmission de départ (SMLi) et par une de ses entrées, de trame d'impulsions à trame d'impulsions, alternativement aux sorties des cellules de memoire de l'une ou de l'autre des parties (SK1, SK2) de la mémoire de conférence, que la mémoire de commutation (SV) du central dont l'élément constitutif est la montage, est reliée, du côté entrée, avec la ligne multiplex à répartition dans le temps pour la direction de transmission d'entrée (SMLi) et, du côté sortie, avec la seconde entrée du dispositif de soustraction (Sub), que chacune des cellules de mémoire de la mémoire d'arrêt associée (H) et qui sont associées aux créneaux temporels formés sur la ligne multiplex à répartition par le temps, comporte, en plus des emplacements de mémoire pour les adresses d'attaque de la mémoire de commutation (SV), des emplacements de mémoire supplémentaires pour des indications concernant le genre de liaison à établir, qu'il est en outre prévu un inverseur (U3) qui, en l'absence de telles indications, assume une première position de commutation dans laquelle il transmet les adresses d'attaque fournies par la mémoire d'arrêt aux entrées de commande de la lecture de la mémoire de commutation (SV), et qui, en présence desdites indications, bascule dans son autre position de commutation dans laquelle il transmet les adresses d'attaque fournies par un compteur d'adresses (ZZL) aux sorties d'attaque de la lecture de la mémoire de commutation (SV), et que le dispositif de soustraction comporte une entrée d'attaque à l'aide de laquelle il passe, lors de la présence desdites indications, d'une position de commutation dans laquelle il sert simplement de circuit de passage pour les mots PCM qui arrivent à sa second entrée, dans une position de commutation dans laquelle il agit comme dispositif de soustraction.

### Claims

1. Method for establishing conference connections in a PCM t.d.m. exchange system in accordance with which total sum code words are formed from the PCM words supplied by the conference subscribers, involving the formation of intermediate sum code words which are intermediately stored in a conference store, are each read out on the occurrence of a new PCM word supplied by a conference subscriber, are subsequently added to this PCM word, and are re-input as a new intermediate sum code word, from which total sum code words the correspondingly delayed PCM words supplied in the preceding pulse frame are subtracted in a following pulse frame during the time slots assigned to the conference subscribers, and in accordance with which end partial sum code words formed in this way are each supplied to the conference subscriber whose sum component they do not contain and accordingly the storage of the intermediate sum code words takes place in the course of the formation of the total sum code words, and the storage of the total sum code words takes place in the course of the formation of the end partial sum code words in each case in a different half, which changes from pulse frame to pulse frame, of a conference store which is selectively operated both during write-in and read-out, characterised in that in order to delay the PCM words supplied by the conference subscribers by the duration of one pulse frame, use is made of the exchange store (SV) which serves to convert time channels in association with the switching of normal two party connections in which case it is operated cyclically during write-in and selectively during read-out and also of the associated holding store (H), for which purpose, during the time slots assigned to the conference subscribers the holding store (H) supplies a criterion on the basis of which the drive addresses for the exchange store which are supplied by a cyclically operating address counter (ZZL) and which in any case serve as write-in drive addresses, also act as read-out addresses.

2. Circuit arrangement for the implementation of the method claimed in claim 1, comprising a conference store which is composed of two equal sized parts each having a number of storage cells which is equal to the number of the most conference connections likely to occur simultaneously, which are each operated simultaneously to the equivalent storage cell in the other part of the conference store, also comprising an adder whose first input is connected to the t.d.m. line for the incoming direction of transmission and whose output can be connected, from pulse frame to pulse frame, alternately to the storage cell inputs of the one or other part of the conference store, and finally comprising a subtractor device, characterised in that the subtractor device (UB) can be connected by its output to the t.d.m. line for the out-going direction of transmission (SMLi) and by one of its inputs, from pulse frame to pulse frame, alternately to the storage cell outputs of the one or other part of the conference store (SK1, SK2), that the exchange store (SV) of the exchange, of which the circuit arrangement forms part, is connected by its input to the t.d.m. line for the incoming direction of transmission (SMLi) and by its output to the second input of the subtractor device (Sub), that each of the storage cells of the associated holding store which are assigned to the time slots formed on the t.d.m. line not only comprises storage places for the drive addresses of the exchange store (SV) but also comprises additional storage places for information concerning the nature of the connections to be handled, that moreover a change-over switch (U3) is provided which, in the absence of the aforementioned information, assumes its first switching position in which it forwards the drive addresses supplied by the holding store to the read-out control inputs of the exchange store (SV), and in the presence of the aforesaid information switches over into its other switching position in which it forwards the drive addresses supplied by an address counter (ZZL) to the read-out control inputs of the exchange store (SV), and that the subtractor device possesses a control input via which, in the presence of the aforementioned information it is brought from a switching position in which it serves merely as a switch-through circuit for the PCM words which reach its second input into a switching position in which it operates as a subtractor device.